# EUROPÄISCHE PATENTSCHRIFT

(11) **EP 1 071 591 B1**
(45) Veröffentlichungstag und Bekanntmachung des Hinweises auf die Patenterteilung: **05.10.2005**
(21) Anmeldenummer: 99962031.3
(22) Anmeldetag: 23.10.1999
(51) Int. Cl.: B60S 1/40, B60S 1/38

(54) **VORRICHTUNG ZUM GELENKIGEN VERBINDEN EINES WISCHBLATTS FÜR SCHEIBEN VON KRAFTFAHRZEUGEN MIT EINEM WISCHERARM**
DEVICE FOR HINGEDLY CONNECTING A WIPER BLADE FOR WINDSHIELDS IN MOTOR VEHICLES TO A WIPER ARM
DISPOSITIF POUR RACCORDER DE MANIERE ARTICULEE A UN BRAS D'ESSUIE-GLACE UNE RACLETTE D'ESSUIE-GLACE DESTINEE A DES VITRES DE VEHICULES AUTOMOBILES

(30) Priorität: 23.02.1999 DE 19907629
(43) Veröffentlichungstag der Anmeldung: 31.01.2001
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE1999/003402
(87) Internationale Veröffentlichungsnummer: WO 2000/050276

(56) Entgegenhaltungen:
- DE-A- 19 729 864
- DE-A- 19 729 865
- DE-A- 19 816 409
- DE-U- 8 119 737
- US-A- 3 147 507

## Beschreibung

### Stand der Technik

Die Erfindung geht aus von einer Vorrichtung nach der Gattung des Anspruchs 1. Bei einer bekannten Vorrichtung dieser Art (DE-U-81 19 737) ist an einen aus Kunststoff hergestellten Wischerarm ein Gelenkzapfen angeformt, der über einen Längsschlitz in eine Querbohrung einrastbar ist, die in einem als Wischleistenträger dienenden Gestellteil aus einem elastischen Kunststoff angeordnet ist. Dabei ergeben sich Schwierigkeiten bei der Materialauswahl sowohl für den Wischerarm als auch für das Gestellteil. Beim Wischerarm ist beispielsweise die erforderliche Steifigkeit zu beachten, was Einschränkungen bezüglich der Materialauswahl für das Gestellteil als Gleitpartner für den Gelenkzapfen mit sich bringt. An das Gestellteil selbst werden sich gegenüberstehende Anforderungen gestellt. So soll einmal die Engstelle am Längsschlitz so stark elastisch aufweitbar sein, dass der Gelenkzapfen in die Querbohrung eingerastet werden kann und während des Wischbetriebs sicher gehalten ist, andererseits soll das Gestellteil sich in einer auf der zu wischenden Scheibe stehenden Ebene federelastisch der Scheibenoberfläche anpassen und in der quer zur Wischblatt Längsrichtung erfolgenden Wischbewegung relativ steif sein. Allen diesen Anforderungen kann nur durch unbefriedigende Kompromisslösungen Rechnung getragen werden.

Mit der DE 197 29 864 A1 ist ein Wischblatt bekannt geworden, das ein mehrteiliges Tragelement mit einem, bereits eine Gelenkachse umfassendes Kupplungsteil aufweist.

### Vorteile der Erfindung

Bei der erfindungsgemäßen Vorrichtung mit den Merkmalen des Anspruchs 1 ist es möglich den Wischleistenträger aus einem Material, beispielsweise einem Federbandstahl herzustellen, das allen an diesen gestellten Forderungen gerecht wird. Für das an diesem angeordnete Kupplungselement steht eine Vielzahl von Kunststoffen zur Verfügung, deren Eigenschaften als Gleitpartner für den Gelenkbolzen und auch für die elastische Aufweitbarkeit der Engstelle günstig sind. Erfindungsgemäß ist die Vorrichtung mit Sperrmitteln zum Sichern der Betriebsposition zwischen Querbohrung und Gelenkbolzen versehen. Dadurch wird ein hoher Grad an Betriebssicherheit für die Gelenkverbindung zwischen Wischerarm und Wischblatt erreicht.

Um ein besonders niedrig bauendes Wischblatt samt Verbindungsvorrichtung zu erreichen weist der Träger zwei aus einem federelastischen Metall bestehende, langgestreckte Tragschiene auf, die in zu den Längsseiten der Wischleiste offenen Längsnuten angeordnet sind wobei die Tragschienen über wenigstens einen Längsabschnitt mit jeweils einem Randstreifen seitlich aus den Längsnuten ragen so dass an den beiden Randstreifen der Tragschienen das Kupplungselement gehalten werden kann.

Zur Sicherung der Tragschienen in ihren Längsnuten quer zu deren Längserstreckung sind an den Längsseiten des Kupplungselements und an dessen den Tragschienen zugewandter Unterseite sich zur Scheibe hin erstreckende, krallenartige Ansätze angeordnet deren jeweils einer L-Schenkel eine Ebene quert in welcher sich die beiden Tragschienen befinden und die jeweils anderen L-Schenkel von den einen L-Schenkel ausgehend gegeneinander gerichtet sind und die Randstreifen der Tragschienen untergreifen. Dabei ist es unerheblich ob die anderen L-Schenkel direkt an der Unterseite der Tragschienen zur Anlage kommen oder ob sich zwischen diesen und den Randstreifen noch eine Zwischenlage, beispielsweise ein Fortsatz der Wischleiste befindet.

In Weiterbildung der Erfindung ist die Vorrichtung mit Sperrmitteln zum Sichern der Betriebsposition zwischen Querbohrung und Gelenkbolzen versehen. Dadurch wird ein hoher Grad an Betriebssicherheit für die Gelenkverbindung zwischen Wischerarm und Wischblatt erreicht.

Zweckmäßig weisen die Sperrmittel eine am Wischerarm angeordnete, von der Scheibe wegweisende Anschlagschulter auf, der eine der Scheibe zugewandte Gegenschulter des Wischblatts zugeordnet ist.

Eine besonders einfache und kompaktbauende Ausgestaltung der Verbindungsvorrichtung ergibt sich, wenn die Anschlagschulter an einem zur Scheibe hin vorspringenden, winkelförmigen Ansatz des Wischerarms ausgebildet ist.

Wenn der Wischerarm zumindest im Bereich des Gelenkbolzens zwei mit Abstand voneinander und parallel zu einander, zur Scheibe stehend ausgerichtete Wangen aufweist, an denen jeweils ein Ende des Gelenkbolzens gehalten ist kann auch der als separates Bauteil hergestellte Gelenkbolzen aus einem für seine Aufgabe besonders geeigneten Material hergestellt sein.

Um einen stabilen Wischerarm zu erhalten, der gleichzeitig die Verbindungsvorrichtung gegenüber Umwelteinflüssen weitgehend schützt und damit deren Lebensdauer erheblich verlängert sind die Wangen durch die U-Schenkel des im Querschnitt zumindest abschnittsweise U-förmigen Wischerarms gebildet wobei der Ansatz an der der Scheibe zugewandten Innenseite der U-Basis angeordnet ist und die U-Schenkel Längsseiten des Kupplungselements übergreifen.

Eine besonders gute Führung des Wischblatts quer zu dessen Längserstreckung und damit ein ruhiger Wischbetrieb ergibt sich, wenn der Abstand zwischen den U-Schenkeln auf das Abstandsmaß zwischen zwei voneinander abgewandten Längs-Seitenflächen des Kupplungselements abgestimmt ist.

Zur weiteren Verbesserung des Schutzes gegen Umwelteinflüsse überdeckt die U-Basis des Wischerarms in Betriebsstellung die Engstelle der Querbohrung.

Ein besonders einfacher, stabiler und kostengünstiger Aufbau des Kupplungselements ist erreicht, wenn in weiterer Ausgestaltung der Erfindung das Kupplungselement eine mit den krallenartigen Ansätzen versehene Basisplatte hat die einen kastenartigen Aufbau trägt, wenn weiter die sich in Längsrichtung des Wischblatts erstreckenden Seitenwände durch einen die Querbohrung aufweisenden Lagerblock miteinander verbunden sind und wenn schließlich zwischen der Oberwand des Aufbaus und dem Lagerblock ein Schlitz verbleibt. Dabei sorgt der Lagerblock für die Festigkeit des Aufbaus und der Schlitz ermöglicht eine Durchführung des winkelförmigen Armansatzes, damit dessen Anschlagschulter in seine Arbeitsposition gebracht werden kann.

Wenn zwischen dem Lagerblock und der Basisplatte des Kupplungselements eine Ausnehmung angeordnet ist ergibt sich zwangsläufig ein Eintauchraum für den einen Schenkel des winkelförmigen, am Wischerarm angeordneten Ansatzes.

In Fortführung dieser Ausbildung ergibt sich bei entsprechender Anpassung zwangsläufig die wischblattseitige Gegenschulter an der Unterseite des Lagerblocks.

Besondere zusätzliche Maßnahmen zur Aufrechterhaltung einer betriebssicheren Gelenkverbindung können entfallen, wenn bei Inbetriebsstellung befindlichem Wischerarm die Anschlagschulter der Wischerarms der Gegenschulter des Wischblatts direkt benachbart gegenüberliegt.

Bei einem Wischblatt mit einer sich über die obere Bandfläche des Tragelements hinaus erstreckenden Windabweisleiste ergibt sich eine zweckmäßige Anordnung des Kupplungselements in einer Aussparung der Windabweisleiste.

Zum besseren Montageablauf ist bei einem Wischblatt mit Windabweisleiste der kastenartige Aufbau des Kupplungselements in Längsrichtung des Wischblatts gesehen gegenüber dessen Basisplatte nach der Seite versetzt, zu welcher eine an der Windabweisleiste ausgebildete Anströmskehle der Windabweisleiste weist.

Zur Verbesserung des Anlegeverhaltens des Wischblatts an der Scheibe auch bei hohen Fahrgeschwindigkeiten ist der vom Fahrtwind überwiegend angeströmte U-Schenkel des Wischerarms mit einer als Windabweisfläche dienenden Anfasung versehen wobei zur Beibehaltung einer niedrigen Bauhöhe des am Wischerarm angeschlossenen Wischblatts samt Kupplungselement der im Bereich dieser Anfasung liegende Teil des kastenartigen Aufbaus an den Verlauf dieser Anfasung angepaßt ist.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

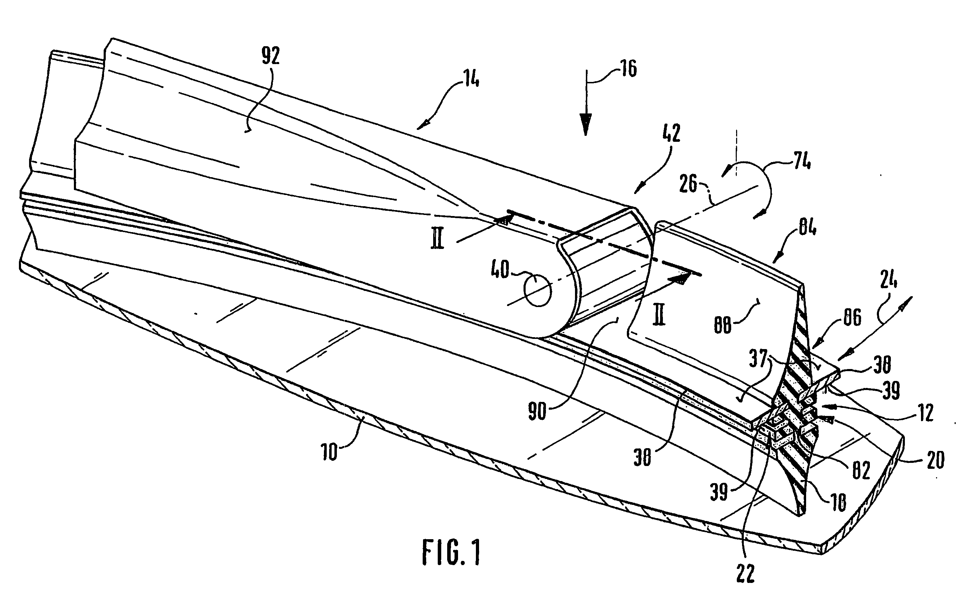

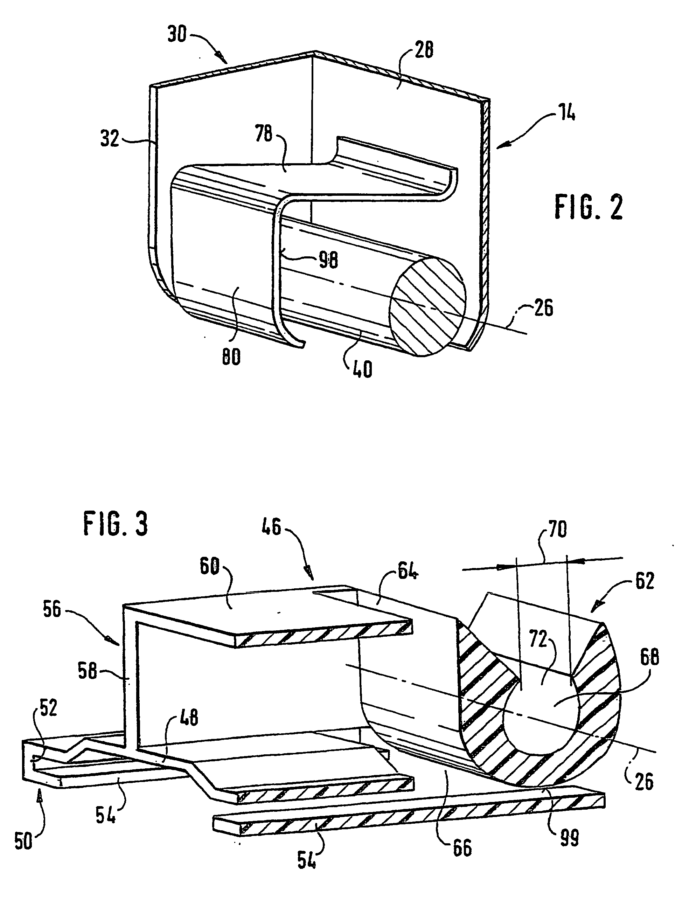

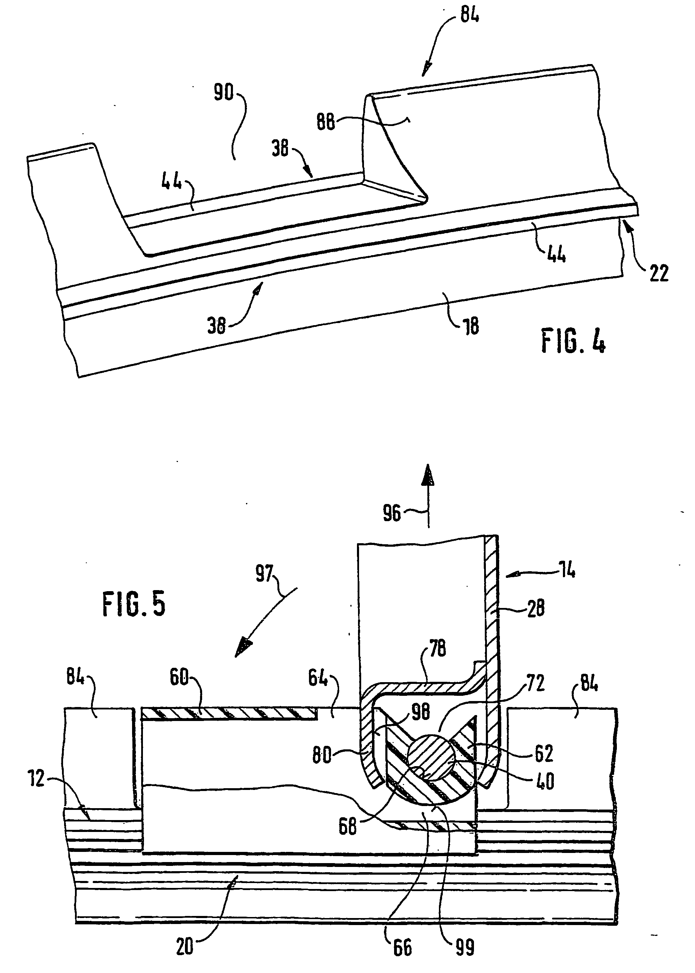

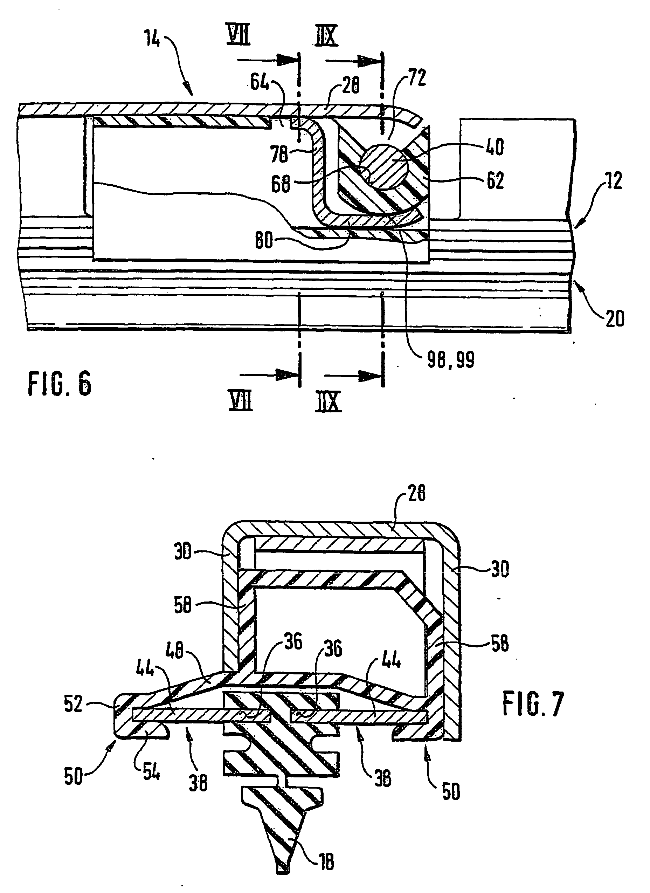

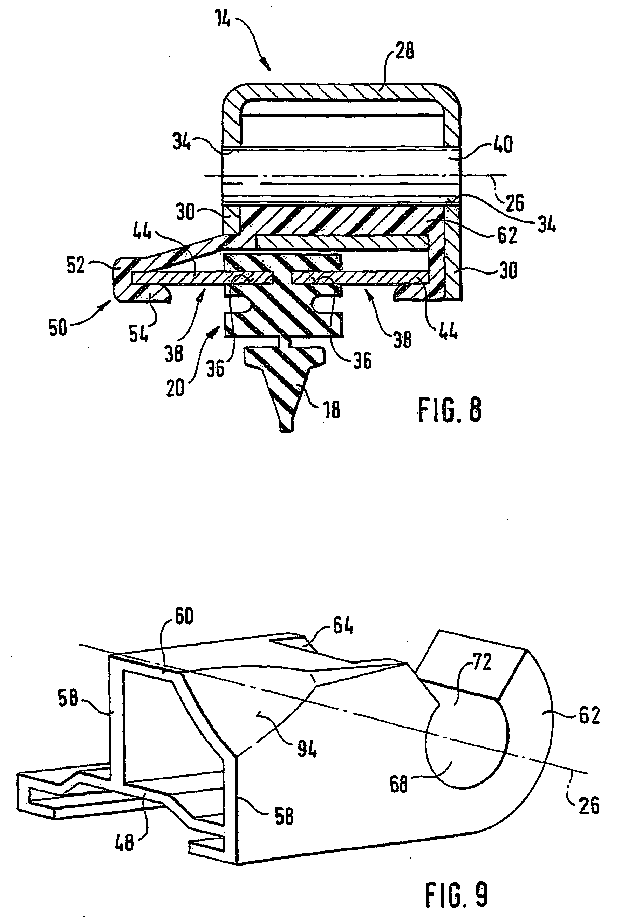

In der Zeichnung zeigen: Figur 1 eine perspektivische Teildarstellung eines über eine Verbindungsvorrichtung an einem Wischerarm angelenktes, mit einer Wischleiste an der zu wischenden Scheibe angelegtes Wischblatt, Figur 2 den armseitigen Teil der Verbindungsvorrichtung in perspektivischer, vergrößerter Darstellung, entlang der Linie II-II in Figur 1 geschnitten und in Vormontageposition gezeichnet, Figur 3 das wischblattseitige Kupplungselement der Verbindungsvorrichtung in perspektivischer, vergrößerter Darstellung, entlang der Linie II-II in Figur 1 geschnitten und in Vormontageposition gezeichnet, Figur 4 den Mittelabschnitt des Wischblatts gemäß Figur 1 bei entferntem Kupplungselement, vergrößert dargestellt, Figur 5 den Wischerarm und das Wischblatt in einer Montage-Zwischenposition verkleinert dargestellt und entsprechend den Figuren 2 und 3 geschnitten, Figur 6 die Anordnung gemäß Figur 5 in Betriebsposition, Figur 7 die Schnittfläche eines Schnitts durch die Anordnung gemäß Figur 6, entlang der Linie VII-VII geschnitten, Figur 8 die Schnittfläche eines Schnitts durch die Anordnung gemäß Figur 6 entlang der Linie VIII-VIII geschnitten und Figur 9 eine perspektivische Ansicht des mit einer Anfasung versehenen Kupplungselements.

### Beschreibung des Ausführungsbeispiels

Ein in Figur 1 perspektivisch dargestellter Mittelabschnitt eines an einer Scheibe 10 eines Kraftfahrzeuges angelegten Wischblatt 12 ist am freien Ende eines am Kraftfahrzeug geführten, angetriebenen Wischerarms 14 angelenkt. Der Wischerarm 14 ist in Richtung des Pfeiles 16 zur Scheibe 10 belastet und legt das Wischblatt 10 mit der Wischlippe 18 seiner langgestreckten, gummielastischen Wischleiste 20 an der zu wischenden Oberfläche der Scheibe 10 an. Die Wischleiste 20 wird von einem bandartig langgestreckten Tragelement 22 gehalten zu dem beim Ausführungsbeispiel zwei aus Metall gefertigte Längsschienen gehören auf die später noch eingegangen wird. Das Tragelement kann jedoch auch als einteiliges Metallband ausgebildet sein, an dessen der Scheibe 10 zugewandten unteren Bandfläche die Wischleiste angeordnet ist und mit Randstreifen seitlich über die Wischleiste 20 hinausragt. Die gelenkige Verbindung zwischen Wischerarm 14 und Wischblatt 12 ermöglicht eine kontinuierliche Anpassung der Wischlippe 18 an die in aller Regel sphärisch gekrümmte Scheibe 10, wenn das Wischblatt seine quer zu seiner Längserstreckung gerichtete Wischbewegung (Doppelpfeil 24) zwischen zwei Umkehrlagen ausführt. Dabei schwenkt das Wischblatt 10 um eine Gelenkachse 26, die in Figur 1 strichpunktiert dargestellt ist.

Die Ausbildung des freien Endes des Wischerarms 14 im Hinblick auf die erfindungsgemäße Verbindungsvorrichtung ist aus Figur 2 ersichtlich. Der Wischerarm hat an seinem dort dargestellten freien Endabschnitt einen im wesentlichen U-förmigen Querschnitt mit einer U-Basis 28, an die sich zwei U-Schenkel 30 anschließen. Die U-Schenkel 30 sind zur Scheibe 10 gerichtet. Sie liegen in Arbeits- oder Bewegungsrichtung (Doppelpfeil 24) mit Abstand voneinander und parallel zueinander. Die Schenkel 30 erstrecken sich bis zum freien Ende des Wischerarms 14 und bilden dort Wangen 32, die zur Scheibe 10 stehend angeordnet sind. Weiter ist aus Figur 8 ersichtlich, daß jede der beiden Wangen 32 von einer Lagerbohrung 34 durchdrungen ist und daß beide Bohrungen eine gemeinsame Längsachse aufweisen, welche identisch ist mit der Gelenkachse 26. In den Lagerbohrungen 34 sind die beiden Enden eines Gelenkbolzens 40 gehalten, der zum wischerarmseitigen Teil einer Verbindungsvorrichtung 42 gehört mit welcher das Wischblatt 12 an dem Wischerarm 14 angeschlossen werden kann. Der Gelenkbolzen 40 erstreckt sich im wesentlichen in Richtung der Wischbewegung (Doppelpfeil 24) des Wischblatts.

Die Ausgestaltung des Wischblatts 12 zeigen insbesondere die Figuren 1, 4, 7 und 8. Dort ist ersichtlich, daß die langgestreckte gummielastische Wischleiste 20 mit Abstand von der zu wischenden Scheibe 10 zwei Längsnuten 36 aufweist, die zu den voneinander abgewandten Längsseiten der Wischleiste 20 hin randoffen sind. Die Längsnuten 36 liegen in einer gemeinsamen Ebene und dienen zur Aufnahme jeweils einer der vorher erwähnten Längsschienen 38, deren Länge etwa der Länge der Wischleiste 20 entspricht. Die beiden Längsschienen 38 sind aus einem federelastischen Material hergestellt und ragen mit Randstreifen 44 aus ihren Längsnuten 36. Sie stellen wichtige Teile des Tragelements 22 dar, das bei Ausführungsbeispiel in Längsrichtung des Wischblatts 12 geteilt ist. An den Randstreifen 44 der Längsschienen 38 ist ein Kupplungselement 46 gehalten, welches den wischblattseitigen Teil der Verbindungsvorrichtung 42 darstellt. Das Kupplungselement 46 hat eine Basisplatte 48, welche traversenartig die beiden Längsschienen 38 quer zu deren Längserstreckung übergreift. Das Kupplungselement 46 ist an seinen Längsseiten beziehungsweise an den Längsseiten seiner Basisplatte 48 mit sich zur Scheibe 10 hin erstreckenden, krallenartigen Ansätzen 50 versehen, die im Querschnitt gesehen eine L-Form aufweisen. Der eine L-Schenkel 52 jeder Kralle ist mit der Basisplatte 48 verbunden und quert die Ebene, in welche sich die beiden Längs- oder Tragschienen 38 befinden. Mit Abstand von der Basisplatte 48 gehen die einen L-Schenkel 52 in die anderen L-Schenkel 54 über. Diese sind so angeordnet, daß sie vom einen L-Schenkel 52 aus gegeneinander gerichtet sind. Insbesondere aus den Figuren 7 und 8 ist ersichtlich, daß die krallenartigen Ansätze 50 mit ihren anderen L-Schenkeln 54 die Randstreifen 44 der Tragschienen 38 untergreifen. Das Kupplungselement 46 ist somit an den beiden Randstreifen 44 der Längs- oder Tragschienen 38 gehalten. Gleichzeitig hält das Kupplungselement 46 die Tragschienen 38 quer zu deren Längserstreckung sicher in den Längsnuten 36 der Wischleiste 20. An der von der Scheibe 10 abgewandten oberen Bandfläche 37 der Längsschienen 38 ist an der Basisplatte 48 des Kupplungselements 46 ein kastenartiger Aufbau 56 angeordnet (Figuren 3 und 7). Der kastenartige Aufbau 56 erstreckt sich in Längsrichtung des Wischblatts 12. Er hat somit zwei mit Abstand voneinander liegende, mit der Basisplatte 48 verbundene Seitenwände 58 die ihrerseits mit Abstand von der Basisplatte durch eine Deckplatte 60 miteinander verbunden sind. Zur weiteren Stabilisierung des Aufbaus 56 trägt ein an dessen einen Ende befindlicher Lagerblock 62 bei, der ebenfalls die beiden Seitenwände 58 miteinander verbindet. Die Deckplatte 60 endet mit Abstand vor dem Lagerblock 62, so daß zwischen diesem Lagerblock und dem diesem zugewandten Ende der Deckplatte 60 ein Schlitz 64 verbleibt. Zwischen der Basisplatte 48 und dem Lagerblock 62 befindet sich ein Durchgang 66 (Figur 5). Der Lagerblock 62 ist quer zur Längserstreckung des Wischblatts mit einer Querbohrung 68 versehen die zu der von der Scheibe 10 abgewandten Oberseite des Wischblatts 12 in Längsrichtung der Bohrung offen ist. Die Breite 70 dieser schlitzartigen Öffnung 72 ist schmaler als der Durchmesser der Querbohrung 68 so daß die Öffnung 72 eine Engstelle bildet. Das Kupplungselement 46 ist aus einem elastischen Kunststoff hergestellt, die es ermöglicht, den Gelenkbolzen 40 des Wischerarms 14 in die Querbohrung 68 unter elastischer Aufweitung der Randbereiche der Engstelle 72in die Querbohrung 68 einzuführen. Der Durchmesser der Querbohrung ist so auf den Durchmesser des Gelenkbolzens 40 abgestimmt, daß zwischen dem Kupplungselement 46 beziehungsweise zwischen dem mit diesem verbundenen Wischblatt 12 und dem Wischerarm 14 eine Relativbewegung um die Gelenkachse 26 möglich ist, weil die Längsachse des Gelenkbolzens 40 und auch die Längsachse der Querbohrung 68 in montiertem Zustand des Wischblatts am Wischerarm (Figuren 1, 5,6 und 8) deckungsgleich sind.

An den einander zugewandten Innenseiten der U-Schenkel 30 des Wischerarms 14 sind die Wangen 32 ausgebildet der Abstand zwischen den beiden Wangen ist so auf den Abstand der Außenseiten der Seitenwände 58 des Aufbaus 56 abgestimmt, daß die Schwingbewegung (Doppelpfeil 74 in Figur 1) nicht beeinträchtigt wird und daß die Gelenkverbindung in Richtung der Gelenkachse 26 gesehen möglichst spiellos ist.

Wie insbesondere Figur 2 zeigt ist der Wischerarm 14 im Bereich des Gelenkbolzens 40 mit einem an der Innenseite der U-Basis 28 angeordneten, von diesem aus vorspringenden winkelförmigen Ansatz 76 versehen, dessen einer Winkelschenkel 78 an der U-Basis 28 angeordnet ist und dessen anderer Winkelschenkel 80 den Gelenkbolzen 40 mit Abstand untergreift. Die Breite des Ansatzes 76 ist geringer als der Abstand zwischen den U-Schenkeln 30 des Wischerarms 14.

Wie besonders Figur 1 zeigt, erstreckt sich die Wischlippe 18 der Wischleiste 20 von der Unterseite 39 der Längs- öder Tragschienen 38 aus zur Scheibe 10 hin. Ein zwischen den beiden Längsnuten 36 verbleibender Längssteg 82 verbindet die Wischleiste 20 mit einer Windabweisleiste 84, die an einem leistenartigen Fortsatz 86 der Wischleiste ausgebildet ist. Die Windabweisleiste 84 erstreckt sich über die gesamte Länge des Wischblatts beziehungsweise der Längsschienen 38 und weist auf ihrer dem Fahrtwind überwiegend zugewandten Längsseite eine Anströmkehle 88 auf. Um das Kupplungselement 46 möglichst nahe an die Längsschienen 38 heran zu bringen, ist die Windabweisleiste 84 im Längs- Mittelbereich des Wischblatts mit einer Aussparung 90 versehen, in welcher das Kupplungselement 46 angeordnet ist (Figuren 1 und 4). Wie besonders die Figuren 3, 7 und 8 zeigen ist der kastenartige Aufbau 56 des Kupplungselements 46 in Längsrichtung des Wischblatts gesehen gegenüber dessen Basisplatte 48 nach der Seite versetzt angeordnet, zu welcher die an der Windabweisleiste 84 ausgebildete Anströmkehle 88 weist. Zur weiteren Verbesserung des Anlegeverhaltens des Wischblatts an der zu wischenden Scheibe, auch bei hohen Fahrgeschwindigkeiten, ist der Wischerarm 14 an seiner vom Fahrtwind überwiegend angeströmten Seite mit einer als Windabweisfläche dienenden Anfasung 92 versehen, die sich bis in den Bereich des Gelenkbolzens 40 erstreckt und somit auch bis in den kastenartigen Aufbau 56 des Kupplungselements 46 reicht. Zur Beibehaltung einer möglichst geringen Bauhöhe für das Wischblatt und den an diesem angeschlossenen Wischerarm ist der im Bereich dieser Anfasung 92 liegende Teil des Aufbaus 56 an den Verlauf der Anfasung 92 angepaßt. Figur 9 zeigt, daß dies durch eine entsprechende Anschrägung 94 im Bereich der Deckplatte 60 und der betreffenden Seitenwand 58 erreicht werden kann.

Zum Verbinden des mit dem Kupplungselement 46 versehenen Wischblatts 12 mit dem freien Ende des Wischerarms 14 müssen diese beide Bauteile in eine Position zueinander gebracht werden, die aus den Figuren 2 und 3 entnehmbar ist. Danach wird das Wischblatt 12 in Richtung des Pfeiles 96 in Figur 5 so an den Wischerarm herangeführt, daß der Lagerblock 62 zwischen die U-Basis 28 und den anderen Winkelschenkel 80 des Ansatzes 76 zu liegen kommt. Eine entsprechende maßliche Abstimmung ist dazu natürlich Voraussetzung. Aus dieser in Figur 5 dargestellten Zwischen- Montageposition wird nun eine Relativbewegung zwischen Wischerarm 14 und Wischblatt 12 entsprechend dem Schwenkpfeil 97 (Figur 5) durchgeführt, so daß wie in Figur 6 gezeigten Betriebsstellung der Verbindungsvorrichtung 42 erreicht wird. Dazu geben die Randbereiche der Engstelle 72 vorrübergehend elastisch nach, so daß in der dann erreichten Rast-Gelenkposition schon eine gewisse Arretierung zwischen Wischerarm 14 und Wischblatt 12 erreicht ist. Bei der in Figur 5 dargestellten Zwischen-Montageposition ist gezeigt, daß der andere Winkelschenkel 80 durch den Schlitz 64 im Aufbau 56 des Kupplungselements 46 hindurchgreift. Nach erfolgter Schwenkbewegung gemäß dem Pfeil 97 in Figur 5 wird die in Figur 6 gezeigte Betriebsstellung der Verbindungsvorrichtung 42 erreicht. Dabei taucht der andere Winkelschenkel 80 des Ansatzes 76 in die durch den Durchgang 66 gebildete Ausnehmung zwischen der Basisplatte 48 und dem Lagerblock 62 ein. Die dem Lagerblock 62 zugewandte Innenseite des anderen Schenkels 80 bildet eine Anschlagschulter 98, die mit einer Gegenschulter 99 zusammen wirkt, welche an der der Basisplatte zugewandten Unterseite des Lagerblocks 62 ausgebildet ist. Es ist somit klar ersichtlich, daß bei Inbetriebsstellung befindlichem Wischerarm die Anschlagschulter 98 des Wischerarms 14 der Gegenschulter 99 des Wischblatts 12 direkt benachbart gegenüber liegt. Dadurch wird verhindert, daß der Gelenkbolzen 40 unbeabsichtigt aus der Querbohrung 68 des Lagerblocks gelangen kann. Diese Anordnung bildet somit ein Sperrmittel zum Sichern der Betriebsposition zwischen der Querbohrung 68 und dem Gelenkbolzen 40. Weiter zeigt Figur 6, daß die U-Basis 28 des Wischerarms in Betriebsstellung die Engstelle der Öffnung 72 überdeckt. Die Figuren 7 und 8 machen deutlich, daß der Abstand zwischen den U-Schenkeln 30 des Wischerarms 14 auf das Abstandsmaß zwischen den zwei voneinander abgewandten Längs- Seitenflächen beziehungsweise den Seitenwänden 58 des Kupplungselements 46 abgestimmt sind und daß die U-Schenkel 30 somit Längsseiten des Kupplungselements 46 übergreifen.

Die erfindungsgemäße Verbindungsvorrichtung ermöglicht aufgrund ihrer besonderen Merkmale eine besonders niedrige Bauweise des Wischblatts, deren Höhe, zusammen mit dem an diesem angeschlossenen Wischerarm nur unwesentlich vergrößert wird und die darüber hinaus eine absolute Sicherung gegen unbeabsichtigtes Lösen des Wischblatts 12 vom Wischerarm 14 darstellt. Zum Lösen des Wischblatts 12 vom Wischerarm 14 muß das Wischblatt bezüglich des Wischerarm 14 in die in Figur 5 gezeigte Zwischen-Montageposition gebracht werden, in welcher die Lösebewegung entgegen dem Pfeil 96 ausgeführt werden kann.

## Patentansprüche

1. Vorrichtung zum gelenkigen Verbinden eines Wischblatts (12), insbesondere für Scheiben (10) von Kraftfahrzeugen, mit einem zwischen Umkehrlagen bewegbaren Wischerarm (14), der an seinem freien Endabschnitt mit einem sich im wesentlichen in Bewegungsrichtung erstreckenden Gelenkbolzen (40) zum Anschließen eines langgestreckten Wischblatts versehen ist, welches ein langgestrecktes elastisches Tragelement (22) aufweist, *das mindestens einen Wischleistenträger und ein Kupplungselement umfasst und* an dessen der Scheibe zugewandten Unterseite eine an der Scheibe (10) anlegbare Wischleiste (20) angeordnet und das Tragelement mit einer zu seiner Oberseite offenen Querbohrung (68) versehen ist, deren Öffnungsbreite eine Engstelle (72) bildet, die schmaler ist als der Bohrungsdurchmesser, wobei die Randbereiche der Engstelle auf das Maß des Bohrungsdurchmessers elastisch aufweitbar sind, **dadurch gekennzeichnet, dass** *der Wischleistenträger des* Tragelements *aus einem Metall besteht und* zumindest eine bandartig langgestreckte, federelastische Tragschiene zum Halten der Wischleiste (20) aufweist, an deren von der Scheibe (10) abgewandten Oberseite (37) *das* aus einem elastischen Kunststoff bestehende, mit der Querbohrung (68) versehene, *separate* Kupplungselement (46) angeordnet ist *und* dass die Vorrichtung mit Sperrmitteln (98, 99) zum Sichern der Betriebsposition zwischen Querbohrung (68) und Gelenkbolzen (40) versehen ist.

2. Vorrichtung nach Anspruch 1 **dadurch gekennzeichnet, dass** der *Wischleistenträger* zwei aus einem federelastischen Metall bestehende, langgestreckte Tragschienen (38) aufweist, die in zu den Längsseiten der Wischleiste (20) randoffenen Längsnuten (36) angeordnet sind sowie über wenigstens einen Längsabschnitt mit jeweils einem Randstreifen (44) seitlich aus den Längsnuten ragen und dass an den beiden Randstreifen der Tragschienen das Kupplungselement (46) gehalten ist.

3. Vorrichtung nach Anspruch 2, **dadurch gekennzeichnet, dass** an den Längsseiten des Kupplungselements (46) und an dessen den Längsschienen (38) zugewandten Unterseite (39) sich zur Scheibe (10) hin erstreckende, krallenartige, L-förmige Ansätze (50) angeordnet sind, deren jeweils einer L-Schenkel (52) eine Ebene quert in welcher sich die beiden Tragschienen befinden und dass die jeweils anderen L-Schenkel (54) von den einen L-Schenkel (52) ausgehend gegeneinander gerichtet sind und die Randstreifen (44) der Tragschienen (38) untergreifen.

4. Vorrichtung nach einem der Ansprüche 1 bis 3, **dadurch gekennzeichnet, dass** die Sperrmittel eine am Wischerarm (14) angeordnete, von der Scheibe (10) wegweisende Anschlagschulter (98) aufweisen, der eine der Scheibe (10) zugewandte Gegenschulter (99) des Wischblatts (12) zugeordnet ist.

5. Vorrichtung nach Anspruch 4, **dadurch gekennzeichnet, dass** die Anschlagschulter (98) an einem zur Scheibe (10) hin vorspringenden, winkelförmigen Ansatz (76) des Wischerarms (14) ausgebildet ist.

6. Vorrichtung nach einem der Ansprüche 1 bis 5, **dadurch gekennzeichnet, dass** der Wischerarm (14) zumindest im Bereich des Gelenkbolzens (40) zwei mit Abstand voneinander und parallel zueinander, zur Scheibe (10) stehend ausgerichtete Wangen (32) aufweist, an denen jeweils ein Ende des Gelenkbolzens (40) gehalten ist.

7. Vorrichtung nach Anspruch 6, **dadurch gekennzeichnet, dass** die Wangen (32) durch die U-Schenkel (30) des im Querschnitt zumindest abschnittsweise U-förmigen Wischerarms (14) gebildet sind, dass der Ansatz (76) an der der Scheibe (10) zugewandten Innenseite der U-Basis (28) angeordnet ist und dass die U-Schenkel (30) Längsseiten des Kupplungselements (46) übergreifen.

8. Vorrichtung nach Anspruch 7, **dadurch gekennzeichnet, dass** der Abstand zwischen den U-Schenkeln (30) auf das Abstandsmaß zwischen zwei voneinander abgewandten Längs- Seitenflächen des Kupplungselements (46) abgestimmt sind.

9. Vorrichtung nach einem der Ansprüche 7 oder 8, **dadurch gekennzeichnet, dass** die U-Basis (28) des Wischerarms (14) in Betriebsstellung die Engstelle der Querbohrung (68) überdeckt.

10. Vorrichtung nach einem der Ansprüche 1 bis 9, **dadurch gekennzeichnet, dass** das Kupplungselement (46) eine mit den krallenartigen Ansätzen (50) versehene Basisplatte (48) hat, die einen kastenartigen Aufbau (56) trägt, dass die sich in Längsrichtung des Wischblatts (12) erstreckenden Seitenwände (58) durch einen die Querbohrung (68) aufweisenden Lagerblock (62) miteinander verbunden sind und dass zwischen der oberen Deckplatte (60) des Aufbaus (56) und dem Lagerblock (62) ein Schlitz (64) verbleibt.

11. Vorrichtung nach Anspruch 10, **dadurch gekennzeichnet, dass** zwischen dem Lagerblock (62) und der Basisplatte (48) des Kupplungselements (46) eine Ausnehmung (66) angeordnet ist.

12. Vorrichtung nach Anspruch 10, **dadurch gekennzeichnet, dass** an der der Basisplatte (48) zugewandten Unterseite des Lagerblocks (62) die Gegenschulter (99) für die Anschlagschulter (98) des Wischerarms (14) ausgebildet ist.

13. Vorrichtung nach einem der Ansprüche 7 bis 12, **dadurch gekennzeichnet, dass** die U-Basis (28) des in Betriebsstellung befindlichen Wischerarms (14) die Engstelle (72) der Querbohrung (68) überdeckt und die Anschlagschulter (98) des Wischerarms der Gegenschulter (99) des Wischblatts (12) direkt benachbart gegenüberliegt.

14. Vorrichtung nach einem der Ansprüche 1 bis 13 für ein Wischblatt mit einer sich über die obere Bandfläche (37) des Tragelements hinaus erstreckenden Windabweisleiste (84), **dadurch gekennzeichnet, dass** das Kupplungselement (46) in einer Aussparung (90) der Windabweisleiste (84) angeordnet ist.

15. Vorrichtung nach Anspruch 14, **dadurch gekennzeichnet, dass** der kastenartige Aufbau (56) des Kupplungselements (46) in Längsrichtung des Wischblatts (12) gesehen gegenüber der Basisplatte (48) nach der Seite versetzt ist, zu welcher eine an der Windabweisleiste (84) ausgebildete Anströmkehle (88) weist.

16. Vorrichtung nach einem der Ansprüche 7 bis 15, **dadurch gekennzeichnet, dass** der vom Fahrtwind überwiegend angeströmte U-Schenkel (30) des Wischerarms (14) mit einer als Windabweisfläche dienenden Anfasung (92) versehen und der im Bereich dieser Anfasung liegende Teil des kastenartigen Aufbaus (56) an den Verlauf dieser Anfasung angepasst ist.

## Claims

1. Device for hingedly connecting a wiper blade (12), in particular for windscreens (10) of motor vehicles, to a wiper arm (14) which can be moved between reversal positions and is provided on its free end section with a hinge pin (40), which extends essentially in the direction of movement and is intended for the connection of an elongate wiper blade which has an elongate, elastic supporting element (22) which includes at least one wiper strip carrier and a coupling element and on the lower side of which, which faces the windscreen, a wiper strip (20) which can be placed against the windscreen (10) is arranged, and the supporting element is provided with a transverse hole (68) which is open to its upper side and the opening width of which forms a narrow point (72) which is narrower than the hole diameter, with it being possible for the edge regions of the narrow point to be elastically widened to the size of the hole diameter, **characterized in that** the wiper strip carrier of the supporting element consists of a metal and has at least one spring-elastic supporting rail, which is elongate in the manner of a band, for holding the wiper strip (20), on the upper side (37) of which, which faces away from the windscreen (10), the separate coupling element (46), which consists of a flexible plastic and is provided with the transverse hole (68) is arranged, and **in that** the device is provided with locking means (98, 99) for securing the operating position between the transverse hole (68) and hinge pin (40).

2. Device according to Claim 1, **characterized in that** the wiper strip carrier has two elongate supporting rails (38) which consist of a spring-elastic metal and are arranged in longitudinal grooves (36), which are open at the edge to the longitudinal sides of the wiper strip (20), and protrude laterally out of the longitudinal grooves over at least one longitudinal section with a respective edge strip (44), and **in that** the coupling element (46) is held on the two edge strips of the supporting rails.

3. Device according to Claim 2, **characterized in that** claw-like, L-shaped projections (50) are arranged on the longitudinal sides of the coupling element (46) and on its lower side (39) facing the longitudinal rails (38), which projections extend towards the windscreen (10) and the in each case one L-limb (52) of which crosses a plane in which the two supporting rails are situated, and **in that** the other L-limbs (54) in each case are directed towards one another starting from the one L-limb (52) and engage under the edge strips (44) of the supporting rails (38).

4. Device according to one of Claims 1 to 3, **characterized in that** the blocking means have a stop shoulder (98) which is arranged on the wiper arm (14), points away from the windscreen (10) and is assigned a mating shoulder (99) of the wiper blade (12), which mating shoulder faces the windscreen (10).

5. Device according to Claim 4, **characterized in that** the stop shoulder (98) is formed on an angular projection (76) of the wiper arm (14), which projection projects towards the windscreen (10).

6. Device according to one of Claims 1 to 5, **characterized in that** the wiper arm (14) has, at least in the region of the hinge pin (40), two cheeks (32) which are oriented at a distance from each other and parallel to each other and perpendicularly to the windscreen (10) and on which one end of the hinge pin (40) is held in each case.

7. Device according to Claim 6, **characterized in that** the cheeks (32) are formed by the U-limbs (30) of the wiper arm (14), which is U-shaped in cross section at least in some sections, **in that** the projection (76) is arranged on the inside of the U-base (28), which side faces the windscreen (10), and **in that** the U-limbs (30) engage over longitudinal sides of the coupling element (46).

8. Device according to Claim 7, **characterized in that** the distance between the U-limbs (30) is matched to the size of the distance between two longitudinal side surfaces of the coupling element (46) that face away from each other.

9. Device according to either of Claims 7 and 8, **characterized in that** the U-base (28) of the wiper arm (14) covers the narrow point of the transverse hole (68) in the operating position.

10. Device according to one of Claims 1 to 9, **characterized in that** the coupling element (46) has a base plate (48) which is provided with the claw-like projections (50) and bears a box-like construction (56), **in that** the side walls (58) extending in the longitudinal direction of the wiper blade (12) are connected to each other by a bearing block (62) having the transverse hole (68), and **in that** a slot (64) remains between the upper covering plate (60) of the construction (56) and the bearing block (62).

11. Device according to Claim 10, **characterized in that** a recess (66) is arranged between the bearing block (62) and the base plate (48) of the coupling element (46).

12. Device according to Claim 10, **characterized in that** the mating shoulder (99) for the stop shoulder (98) of the wiper arm (14) is formed on the lower side of the bearing block (62), which side faces the base plate (48).

13. Device according to one of Claims 7 to 12, **characterized in that** the U-base (28) of the wiper arm (14) in the operating position covers the narrow point (72) of the transverse hole (68) and the stop shoulder (98) of the wiper arm is situated opposite directly adjacent to the mating shoulder (99) of the wiper blade (12).

14. Device according to one of Claims 1 to 13 for a wiper blade, with a wind-deflecting strip (84) extending beyond the upper band surface (37) of the supporting element, **characterized in that** the coupling element (46) is arranged in a cutout (90) of the wind-deflecting strip (84).

15. Device according to Claim 14, **characterized in that** the box-like construction (56) of the coupling element (46), as seen in the longitudinal direction of the wiper blade (12), is offset in relation to the base plate (48) to the side which an approach-flow throat (88) formed on the wind-deflecting strip (84) faces.

16. Device according to one of Claims 7 to 15, **characterized in that that** U-limb (30) of the wiper arm (14) which is predominantly approached by the relative wind is provided with a bevel (92) serving as a wind-deflecting surface, and that part of the box-like construction (56) which is situated in the region of this bevel is matched to the profile of this bevel.

## Revendications

1. Dispositif pour relier de manière articulée un balai d'essuie-glace (12) notamment pour les vitres (10) de véhicule automobile à un bras d'essuie-glace (14) mobile entre deux positions d'inversion de mouvement, et dont le segment d'extrémité comporte un axe d'articulation (40) s'étendant principalement dans la direction de mouvement pour raccorder un balai d'essuie-glace allongé ayant un élément de support (22) élastique allongé qui comprend au moins un support de lame d'essuyage et un élément d'accouplement et dont le côté inférieur tourné vers la vitre comporte une lame d'essuyage (20) appliquée contre la vitre (10), l'élément de support ayant un perçage transversal (68) ouvert vers son côté supérieur et dont la largeur d'ouverture constitue un point étroit (72) inférieur au diamètre du perçage, et
les zones du bord du point étroit peuvent être élargies élastiquement à la dimension du diamètre du perçage,
**caractérisé en ce que**
le support de balai d'essuie-glace de l'élément de support est en métal et comporte au moins un rail élastique en forme de ruban, allongé pour tenir la lame d'essuyage (20) et dont le côté supérieur (37) à l'opposé de la vitre (10) comporte un élément d'accouplement (46), distinct, muni du perçage transversal (68), cet élément étant en matière plastique élastique, et
le dispositif comporte des moyens de blocage (98, 99) pour garantir la position de fonctionnement entre le perçage transversal (68) et l'axe d'articulation (40).

2. Dispositif selon la revendication 1,
**caractérisé en ce que**
le support de balai d'essuie-glace comporte deux rails de support (38), allongés, en métal élastique prévus dans des rainures longitudinales (36) dont le bord est ouvert vers les grands côtés de la lame d'essuyage (20) et tenus par au moins un segment longitudinal avec chaque fois une bande latérale (44) dépassant latéralement des rainures longitudinales, et
l'élément d'accouplement (46) est tenu sur les deux bandes latérales du rail.

3. Dispositif selon la revendication 2,
**caractérisé en ce que**
les grands côtés de l'élément d'accouplement (46) et son côté inférieur (39) tourné vers les rails longitudinaux (38), comportent des prolongements (50) en forme de L, constituant des griffes, dirigés vers la vitre (10) et chaque fois l'une des branches en L (52) traversent un plan dans lequel se trouvent les deux rails de support, et
les autres branches (54) respectives partant de chacune des branches en L (52) sont dirigées l'une vers l'autre et entourent les bandes latérales (44) des rails de support (38).

4. Dispositif selon l'une quelconque des revendications 1 à 3,
**caractérisé en ce que**
les moyens de blocage comportent un épaulement d'appui (98) prévu sur le bras d'essuie-glace (14) et s'écartant de la vitre (10), cet épaulement étant associé à un contre-épaulement (99) du balai d'essuie-glace (12), tourné vers la vitre (10).

5. Dispositif selon la revendication 4,
**caractérisé en ce que**
l'épaulement d'appui (98) est réalisé sur un prolongement de forme coudée (76) du bras d'essuie-glace (14) venant en saillie par rapport à la vitre (10).

6. Dispositif selon l'une quelconque des revendications 1 à 5,
**caractérisé en ce que**
le bras d'essuie-glace (14) comporte au moins au niveau de l'axe d'articulation (40), deux joues (32) écartées l'une de l'autre, parallèles, et dirigées vers la vitre (10), et chacune des joues tient une extrémité de l'axe d'articulation (40).

7. Dispositif selon la revendication 6,
**caractérisé en ce que**
les joues (32) sont réalisées par les branches en forme de U (30) du bras d'essuie-glace (14) qui présente en coupe au moins par endroit une forme de U, et
le prolongement (76) est prévu sur le côté intérieur de la base en forme de U (28) tourné vers la vitre (10), et
les branches en U (30) couvrent les grands côtés de l'élément d'accouplement (46).

8. Dispositif selon la revendication 7,
**caractérisé en ce que**
la distance entre les branches en U (30) correspond à l'écartement des surfaces latérales longitudinales opposées de l'élément d'accouplement (46).

9. Dispositif selon l'une quelconque des revendications 7 ou 8,
**caractérisé en ce que**
la base en U (28) du bras d'essuie-glace (14) couvre le point étroit du perçage transversal (68) en position de fonctionnement.

10. Dispositif selon l'une quelconque des revendications 1 à 9,
**caractérisé en ce que**
l'élément d'accouplement (46) comporte une plaque de base (48) munie des prolongements (50) en forme de griffes, cette plaque de base ayant une super structure (56) en forme de caisson,
les parois latérales (58) s'étendant dans la direction longitudinale du balai d'essuie-glace (12) sont reliées par un bloc palier (62) qui comporte le perçage transversal (68), et
une fente (64) subsiste entre la plaque de recouvrement supérieure (60) de la super structure (56) et le bloc palier (62).

11. Dispositif selon la revendication 10,
**caractérisé par**
une cavité (66) prévue entre le bloc palier (62) et la plaque de base (48) de l'élément d'accouplement (46).

12. Dispositif selon la revendication 10,
**caractérisé en ce que**
le contre-épaulement (99) pour l'épaulement de butée (98) du bras d'essuie-glace (14) est prévu sur le côté inférieur du bloc palier (62) tourné vers la plaque de base (48).

13. Dispositif selon l'une quelconque des revendications 7 à 12,
**caractérisé en ce que**
la base en U (28) du bras d'essuie-glace (14) en position de fonctionnement, couvre le point étroit (72) du perçage transversal (68) et l'épaulement d'appui (98) du bras d'essuie-glace est directement voisin en regard du contre-épaulement (99) du balai d'essuie-glace (12).

14. Dispositif selon l'une quelconque des revendications 1 à 13 pour un balai d'essuie-glace comportant un déflecteur (84) s'étendant au-dessus de la surface en forme de bande (37) supérieure de l'élément de support,
**caractérisé en ce que**
l'élément d'accouplement (46) est logé dans la découpe (90) du déflecteur (84).

15. Dispositif selon la revendication 14,
**caractérisé en ce que**
la super structure (56) en forme de caisson de l'élément d'accouplement (46) est décalée vers le côté dans la direction longitudinale du balai d'essuie-glace (12) en regardant par rapport à la plaque de base (48), côté qui comporte la gorge d'attaque (88) réalisée dans le déflecteur (84).

16. Dispositif selon l'une quelconque des revendications 7 à 15,
**caractérisé en ce que**
la branche en U (30) du bras d'essuie-glace (14) attaquée principalement par le vent de circulation comporte un congé (92) servant de surface de déflexion du vent et au niveau de ce congé, la partie de la super structure (56) en forme de caisson est adaptée au profil de ce congé.
